# EUROPEAN PATENT APPLICATION

(11) **EP 1 950 605 A1**
(43) Date of publication of application: **30.07.2008**
(21) Application number: 06811605.2
(22) Date of filing: 11.10.2006
(51) Int. Cl.: G02F 1/1335, B32B 7/02, B32B 27/30, G02B 5/02

(54) **LIGHT DIFFUSION PLATE FOR LIQUID CRYSTAL DISPLAY**

(30) Priority: 15.11.2005 JP 2005329616
(71) Applicant: Asahi Kasei Chemicals Corporation, Tokyo 100-8440 (JP)
(72) Inventor: MIYAUCHI, Masahiro, Tokyo 1008440 (JP); FURUYA, Norihiko, Tokyo 1008440 (JP)
(74) Representative: HOFFMANN EITLE
(86) International application number: PCT/JP2006/320298
(87) International publication number: WO 2007/058033

(57) **Abstract**

The present invention provides a light diffuser plate for a liquid crystal display, comprising: a low-hygroscopic resin layer (A) having a water absorption after 24 hours of 0.2% or less, as measured according to JIS K7209; and a styrenic resin layer (B) layered on at least one surface of the low-hygroscopic resin layer (A), the styrenic resin layer (B) comprising 50% or more of a styrenic resin and 3.5 to 5 parts by weight of an ultraviolet absorber based on 100 parts by weight of the styrenic resin, wherein the surface of the layer (B) has an arithmetic average roughness (Ra) of 5 µm to 30 µm, as measured according to JIS B0601. The present invention can provide a light diffuser plate for a liquid crystal display which is made of a low-hygroscopic resin capable of preventing warpage due to moisture absorption and also has a scratch resistant surface and significantly improved lightfastness.

## Description

### Technical Field

The present invention relates to a light diffuser plate mounted on a direct backlight device for a liquid crystal display.

### Background Art

The technological innovation of a liquid crystal display for these several years is astonishing. Its market continues to rapidly expand to the screen of a notebook personal computer, a monitoring screen, and a television.

A liquid crystal display uses the twist of liquid crystal molecules to transmit or intercept light into the display to thereby display an image. Since a liquid crystal itself is basically not a material of spontaneous light emission, an image cannot be viewed without external light. The liquid crystal display is quite different from a cathode-ray tube of spontaneous light emission or a plasma display in that respect. Generally, the liquid crystal display needs to be used in combination with a back light source device called a backlight. The backlight refers to a planar light source device to send light from the back of a liquid crystal panel as suggested from its name, and the light source device is generally disposed in the other side of a liquid crystal panel from those who view the liquid crystal display, that is, in a display case.

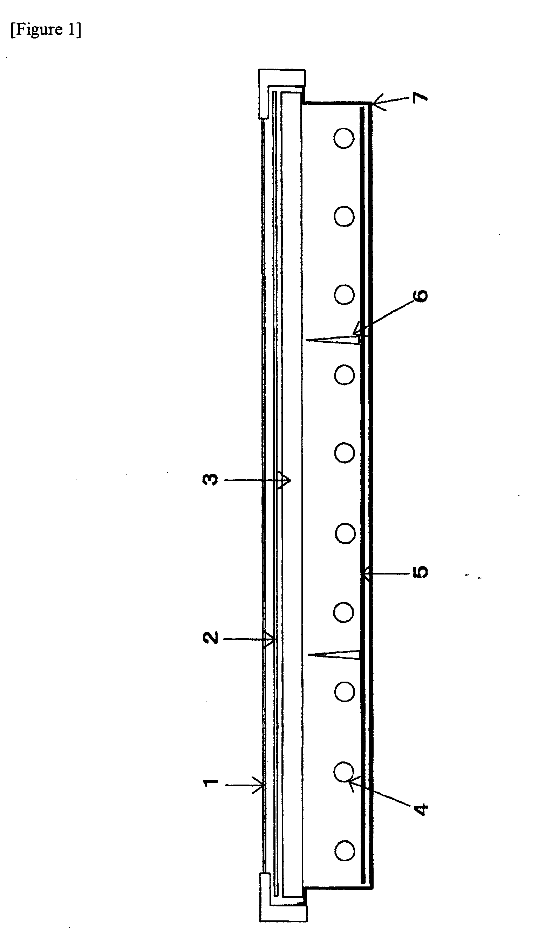

At present, the backlight is roughly divided into two types, a so-called edge-light backlight and a so-called direct backlight. Since the thickness and weight of the liquid crystal can be reduced with the edge-light backlight, it is widely used in the field of the notebook personal computer or the monitoring screen. However, when it is used for a liquid crystal television having a larger screen in recent years, there have been problems such as an increase in luminance unevenness.
Thus, the light source device which attracts attention these days instead of the edge-light backlight, particularly as a backlight for liquid crystal televisions, is the direct backlight. The direct backlight has a very simple structure, and in the case of the liquid crystal television as shown in Figure 1, the direct backlight refers to a constitution obtained by removing a liquid crystal panel 1 from the liquid crystal television. The direct backlight has a structure in which cold-cathode tubes 4 are arranged on a reflection film 5 disposed at the rear side of the liquid crystal panel 1; and a light diffuser plate 3 of a milky-white color for scattering light and an optical film 2 for increasing luminance are placed between the liquid crystal panel 1 and the cold-cathode tubes 4. This is the same structure as that of an illuminating device such as domestic ceiling lighting and an illumination signboard installed in stations and roads.

When such a light source device is used, it is possible to freely design the brightness of a screen by increasing the number of the cold-cathode tubes and also easily change the size of the screen.
The invention in this application relates to a light diffuser plate mounted on this direct backlight.

A first function of the light diffuser plate is a light diffusing function to prevent the see-through of the cold-cathode tubes disposed at the back side of the liquid crystal and obtain uniform surface light emission without luminance unevenness.

In addition to the above, dimensional stability against moisture absorption has increased importance particularly in recent years. When the light diffuser plate is used for a liquid crystal television, a problem that images of the liquid crystal television are disturbed by the deformation of the light diffuser plate has been heard in the market. As a result of detail analysis of the cause of the deformation, it has been found that the light diffuser plate has absorbed moisture and has been warped during the inventory or transportation through market of the liquid crystal television. Acrylic resins excellent in optical properties have been mainly used for the light diffuser plate. Probably, the light diffuser plate has absorbed moisture and has been warped during the inventory or transportation through market under high temperature and high humidity because acrylic resins have a saturated water absorption as high as about 2%.

In order to solve the problem of warpage due to moisture absorption of the light diffuser plate, the research of the material thereof has been made in various places. For example, JP-A-2004-9524 (Patent Document 1), JP-A-2004-50607 (Patent Document 2) and JP-A-2005-112971 (Patent Document 3) disclose light diffuser plates prepared by using an acrylic-styrene copolymer (hereinafter may be referred to as an MS resin) or a styrenic resin as materials. Moreover, JP-A-10-17761 (Patent Document 4) discloses a light diffuser plate using a polycarbonate resin. However, these light diffuser plates have had further problems in that they are poor in lightfastness and scratch resistance.

Generally, the cold-cathode tube used for the backlight of a liquid crystal television is called a three-wavelength tube and is designed so as to selectively emit only the specific wavelength, that is, the light of three wavelengths of red R, green G and blue B. However, the light other than the three wavelengths is also emitted from the cold-cathode tube, although it is very weak. Of the unnecessary light, it is the ultraviolet light that poses problems to the durability of optical members. The ultraviolet light poses the problems of degradation of materials of a light diffuser plate, a light reflector, and an optical film. The cold-cathode tube as a light source has an increasingly longer size and higher output with the recent increase in luminance and increase in the screen size of a liquid crystal television, and the amount of the ultraviolet light emitted is also increasing.

Conventional light diffuser plates have been made of an acrylic resin which is excellent in optical properties and is also durable for outdoor use as a resin that shows the lowest ultraviolet-light degradation. Therefore, no problems have been observed. However, since low moisture absorption has been needed for the resin as mentioned above, an acrylic resin as a material for light diffuser plates has been replaced by an MS resin, a styrenic resin, and a polycarbonate resin. As a result, lightfastness has become a large problem. It is generally known that a styrenic resin and a polycarbonate resin show considerable yellowing and degradation by ultraviolet light.

For that reason, in order to use these styrene and polycarbonate resins for the light diffuser plate, it is indispensable that these materials should be formulated to have an improved lightfastness. For example, the above-described Patent Document 1 and JP-A-2006-116957 (Patent Document 5) disclose a technique to protect the light diffuser plate from ultraviolet light by forming it as a layered structure and adding an ultraviolet absorber in an amount of maximum 3 parts by weight to a film layer. However, it is regrettable that this amount is insufficient to the lightfastness specifications for the liquid crystal television with which the demand is severe in recent years.

Thus, a larger amount of the ultraviolet absorber might be added. However, as also described in Documents 1 and 5, ultraviolet absorbers greatly may bleed out from the resin to not only soil the appearance but reduce lightfastness. As a result, problems have been observed such that the luminance as a liquid crystal display has been greatly reduced. Some techniques have investigated concavo-convex structures on the surface of the light diffuser plate in order to improve the appearance of the light diffuser plate. For example, JP-A-10-67038 (Patent Document 6) describes that, in order to improve aesthetic properties, the average of ten-point surface roughness (hereinafter, may be represented by Rz) is preferably from 0.2 to 0.5 µm. Further, JP-A-2002-196117 (Patent Document 7) describes that, in order to prevent glare, the average of center line surface roughness (hereinafter, may be represented by Ra) is preferably 0.25 µm or less. Thus, it has been considered desirable to provide fine concavo-convex structures on the surface of the light diffuser plate.

On the other hand, the light diffuser plate also has a larger area depending on the increase in the screen size of a liquid crystal television. Since the light diffuser plate is a resin plate, it has a lower rigidity than a liquid crystal panel made of glass and tends to generate deflection and warpage. Therefore, as disclosed for example in JP-A-2004-327449 (Patent Document 8), a projection (hereinafter, referred to as a warpage-preventing pin) is provided inside the direct backlight device to prevent the warpage of the light diffuser plate.

Since this warpage-preventing pin is installed in a state close to the light diffuser plate for its purpose, a problem occurs that the pin often contacts the light diffuser plate and damages the surface thereof due to the installation condition (for example, inclination) or vibration during transportation of a liquid crystal television.

Generally, the material of this warpage-preventing pin is a styrenic resin, a polycarbonate resin, or an olefinic resin. It was inconceivable that the surface of the light diffuser plate was scratched when a light diffuser plate made of an acrylic resin was used, since the acrylic resin had higher hardness. However, scratch resistance is required at present because a styrenic resin and a polycarbonate resin, which are softer resins, are being used as a material of the light diffuser plate.

Some resin plate is subjected to a surface-hardening coating treatment in order to increase scratch resistance. However, since such a treatment increases the cost of the optical member, it is not desirable in a large liquid crystal television for which thorough cost cut of each optical member is needed.

[Patent Document 1] JP-A-2004-9524
[Patent Document 2] JP-A-2004-50607
[Patent Document 3] JP-A-2005-112971
[Patent Document 4] JP-A-10-17761
[Patent Document 5] JP-A-2006-116957
[Patent Document 6] JP-A-10-67038
[Patent Document 7] JP-A-2002-196117
[Patent Document 8] JP-A-2004-327449

### Disclosure of the Invention

### Problems to be Solved by the Invention

An object of the present invention is to provide a light diffuser plate for a liquid crystal display which is made of a low-hygroscopic resin capable of preventing warpage due to moisture absorption and also has a scratch resistant surface and significantly improved lightfastness.

### Means for Solving the Problems

In order to achieve the above object, the present inventors re-studied the concavo-convex structures on the surface of the light diffuser plate for which fine concavo-convex structures have been considered good for the aesthetic properties. As a result, the present inventors have found that, surprisingly, surface scratch resistance and lightfastness can be significantly improved by providing a large concave-convex structure on the surface of the light diffuser plate, on the complete contrary to conventional techniques, and have completed the present invention.

Specifically, the present invention is directed to a light diffuser plate for a liquid crystal display as described below.
1. A light diffuser plate for a liquid crystal display, comprising: a low-hygroscopic resin layer (A) having a water absorption of 0.2% or less; and a styrenic resin layer (B) layered on at least one surface of the low-hygroscopic resin layer (A), the styrenic resin layer (B) comprising 50% or more of a styrenic resin and 3.5 to 5 parts by weight of an ultraviolet absorber based on 100 parts by weight of the styrenic resin, wherein the surface of the layer (B) has an arithmetic average roughness (Ra) of from 5 µm to 30 µm.
2. The light diffuser plate for the liquid crystal display as described above, wherein the low-hygroscopic resin is a styrenic resin or a polycarbonate resin.

### Advantageous Effects of the Invention

The light diffuser plate for the liquid crystal display according to the present invention has a plurality of effects in that it is not only resistant to warpage due to moisture absorption and surface scratches but also has a significantly improved lightfastness.

### Brief Description of the Drawing

Figure 1 is an explanatory schematic drawing showing an example of the constitution of the liquid crystal television equipped with the light diffuser plate according to the present invention.

### Description of Symbols

1 Liquid crystal panel
2 Optical film
3 Light diffuser plate
4 Cold-cathode tube
5 Reflection film
6 Warpage-preventing pin
7 Case

### Best Mode for Carrying Out the Invention

The present invention will be specifically described below.

The light diffuser plate for a liquid crystal display according to the present invention has a layered structure and includes a styrenic resin layer (B) on at least one surface of a low-hygroscopic resin layer (A).

The low-hygroscopic resin used in the present invention is a resin having a water absorption after 24 hours of 0.2% or less, as measured according to JIS K7209. In order to improve the warpage due to moisture absorption which poses the problems in the market, the water absorption at least needs to be 0.2% or less. The water absorption is preferably 0.18% or less, more preferably 0.15% or less, and considering practicality, it is preferably 0.03% or more.

When measured by the above method, for example, the water absorption of a so-called acrylic resin, a polycarbonate resin, and a styrenic resin is 0.3%, 0.2%, and 0.1%, respectively. An acrylic-styrene copolymer (so-called MS resin) comprising methyl methacrylate and styrene as copolymerized monomeric units has a water absorption in the range of from 0.1% to 0.3% depending on the copolymerization ratio. The higher the content of methyl methacrylate, the higher the water absorption is. When the copolymerization ratios of methyl methacrylate units and styrene units are 60:40, 80:20, and 50:50, the resulting copolymers have a water absorption of 0.22%, 0.26%, and 0.2%, respectively. When the styrene ratio is increased to a copolymerization ratio of 20:80, the water absorption will decrease to 0.14%. Polyolefin resins such as polyethylene resins and fluororesins have a water absorption of 0.01% or less, and PET resins have a water absorption of 0.6%.

Therefore, examples of the resins that can be used for the present invention include a polycarbonate resin, a styrenic resin, an MS resin comprising a styrenic monomer in an amount of 50% or more, a polyolefin resin, a fluororesin and the like. Among others, a styrenic resin comprising a styrenic unit in an amount of 50% by weight or more, an MS resin comprising a styrenic unit in an amount of 50% by weight or more and a polycarbonate resin are preferred, and a polystyrene resin and a polycarbonate resin are more preferred. These resins may be used in combination. Most preferred is the case where polystyrene occupies 100% of the resin.

The styrenic resin as described in the present invention refers to a styrene polymer substantially comprising styrene, or a copolymer resin comprising 50% by weight or more of a styrenic monomer having one radically polymerizable double bond in the molecule and less than 50% by weight of an unsaturated monomer copolymerizable with the styrenic monomer (hereinafter, a monomer having one radically polymerizable double bond in the molecule may be referred to as a monofunctional monomer, and a monomer having at least two radically polymerizable double bonds in the molecule may be referred to as a polyfunctional monomer).

Examples of polymers used as the styrenic resin include a polymer obtained by polymerizing a styrenic monofunctional monomer; a copolymer obtained by polymerizing a styrenic monofunctional monomer with another monofunctional monomer; a crosslinked polymer obtained by polymerizing a styrenic monofunctional monomer with a polyfunctional monomer; and a crosslinked polymer obtained by polymerizing a styrenic monofunctional monomer with another monofunctional monomer and a polyfunctional monomer. Examples of the polymerization method adopted for obtaining these styrene polymers generally include suspension polymerization, microsuspension polymerization, emulsion polymerization, and dispersion polymerization.

Examples of a styrenic monofunctional monomer in the styrenic resin include styrene, as well as halogenated styrenes such as chlorostyrene and bromostyrene; and alkyl styrenes such as vinyltoluene, α-methyl styrene, p-methyl styrene, and t-butyl styrene, and optionally, these may be used in combination.

Examples of monofunctional monomers other than the styrenic monofunctional monomer in the styrenic resin include methacrylates such as methyl methacrylate, ethyl methacrylate, butyl methacrylate, cyclohexyl methacrylate, phenyl methacrylate, benzyl methacrylate, 2-ethylhexyl methacrylate, and 2-hydroxyethyl methacrylate; acrylates such as methyl acrylate, ethyl acrylate, butyl acrylate, cyclohexyl acrylate, phenyl acrylate, benzyl acrylate, 2-ethylhexyl acrylate, and 2-hydroxyethyl acrylate; and acrylonitrile, and optionally, these may be used in combination. Among others, methacrylates such as methyl methacrylate are preferred.

Examples of the polyfunctional monomers in the styrenic resin include methacrylates of dihydric and polyhydric alcohols such as 1,4-butanediol dimethacrylate, neopentyl glycol dimethacrylate, ethylene glycol dimethacrylate, diethylene glycol dimethacrylate, tetraethylene glycol dimethacrylate, propylene glycol dimethacrylate, tetrapropylene glycol dimethacrylate, trimethylolpropane trimethacrylate, and pentaerythritol tetramethacrylate; acrylates of dihydric and polyhydric alcohols such as 1,4-butanediol diacrylate, neopentyl glycol diacrylate, ethylene glycol diacrylate, diethylene glycol diacrylate, tetraethylene glycol diacrylate, propylene glycol diacrylate, tetrapropylene glycol diacrylate, trimethylolpropane triacrylate, and pentaerythritol tetraacrylate; and aromatic polyfunctional monomers such as divinylbenzene and diallyl phthalate, and optionally, these may be used in combination.

Examples of MS resins comprising 50% or more of a styrenic monomer include a high molecular weight polymer obtained by polymerizing an acrylic monofunctional monomer; a high molecular weight polymer obtained by polymerizing an acrylic monofunctional monomer with another monofunctional monomer; a crosslinked polymer obtained by polymerizing an acrylic monofunctional monomer with a polyfunctional monomer; and a crosslinked polymer obtained by polymerizing an acrylic monofunctional monomer with another monofunctional monomer and a polyfunctional monomer. Examples of the polymerization method adopted for obtaining the MS resins generally include suspension polymerization, microsuspension polymerization, emulsion polymerization, and dispersion polymerization.

Examples of the above-described acrylic monofunctional monomer include methacrylates such as methyl methacrylate, ethyl methacrylate, butyl methacrylate, cyclohexyl methacrylate, phenyl methacrylate, benzyl methacrylate, 2-ethylhexyl methacrylate, and 2-hydroxyethyl methacrylate; acrylates such as methyl acrylate, ethyl acrylate, butyl acrylate, cyclohexyl acrylate, phenyl acrylate, benzyl acrylate, 2-ethylhexyl acrylate, and 2-hydroxyethyl acrylate; methacrylic acid; and acrylic acid, and optionally, these may be used in combination.

Examples of monofunctional monomers other than the above acrylic monofunctional monomers include monomers exemplified as styrenic monofunctional monomers and acrylonitrile, and optionally, these may be used in combination. Further, examples of polyfunctional monomers in the acrylic polymer include the same monomers as the polyfunctional monomers exemplified in the above styrenic resin, and optionally, these may be used in combination.
On at least one surface, preferably on both surfaces, of the low-hygroscopic resin layer (A), is layered a styrenic resin layer (B) comprising 50% or more of a styrenic resin and 3.5 to 5 parts by weight of an ultraviolet absorber based on 100 parts by weight of the styrenic resin.

The styrenic resin used herein includes a styrenic resin having a copolymerization ratio of the above-described styrenic monomers of 50% or more. The styrenic resin may be the same resin as the styrenic resin used for the low-hygroscopic resin layer (A) or a styrenic resin having a different copolymerization ratio from the styrenic resin used for the low-hygroscopic resin layer (A). Among others, a resin having a copolymerization ratio of styrenic monomers of 80% or more is preferred, and polystyrene is most preferred.

Examples of the resin used other than the styrenic resin include a resin having a water absorption after 24 hours of 0.2% or less, as measured according to JIS K7209, such as a polycarbonate resin, an MS resin which contains a styrenic monomer in an amount of 50% or more, a polyolefin resin, and a fluororesin.
The content of the styrenic resin is preferably 80% or more, more preferably 90% or more, most preferably 100%.

In order to impart the light diffusing function to the light diffuser plate according to the present invention, a light diffusing agent may be contained in the above low-hygroscopic resin layer (A). Further, a light diffusing agent may be contained in the styrenic resin layer (B).

The optical properties of the light diffuser plate are individually designed in accordance with the structure of the direct backlight incorporated, the number of cold-cathode tubes, and the type and luminance specifications for an optical film so that the light diffuser plate has a transmittance of from 50 to 80% and an optical diffusion coefficient of from 30 to 90%. These ranges may be obtained by appropriately adjusting the particle size and the loadings of the light diffusing agent.

The light diffusing agent as an additive preferably has an average particle diameter of from about 0.1 to 50 µm and may be blended in an amount of from 0.1 to 30 parts by weight into 100 parts by weight of the low-hygroscopic resin. The particle diameter is preferably larger when the particle size of the light diffusing agent is used to impart concavo-convex structures to the light diffuser plate as described below.

The light diffusing agent is roughly divided into an inorganic diffusing agent and an organic diffusing agent. Examples of the inorganic light diffusing agent include calcium carbonate, barium sulfate, titanium oxide, aluminum hydroxide, silica, glass, talc, mica, white carbon, magnesium oxide, and zinc oxide. These may be surface-treated with a fatty acid or the like.

Examples of the organic light diffusing agent include styrene polymer particles, acrylic polymer particles, and siloxane polymer particles. Suitably used light diffusing agents are high-molecular weight polymer particles having a weight average molecular weight of from 500,000 to 5,000,000 and crosslinked polymer particles having a gel fraction when dissolved in acetone of 10% or more.

Suitably used styrene polymer particles are polymer particles comprising 50% by weight or more of a styrenic monomer having one radically polymerizable double bond in the molecule (hereinafter, a monomer having one radically polymerizable double bond in the molecule may be referred to as a monofunctional monomer, and a monomer having at least two radically polymerizable double bonds in the molecule may be referred to as a polyfunctional monomer). Examples of the styrene polymer particles include high-molecular weight polymer particles obtained by polymerizing a styrenic monofunctional monomer; high-molecular weight polymer particles obtained by polymerizing a styrenic monofunctional monomer with another monofunctional monomer; crosslinked polymer particles obtained by polymerizing a styrenic monofunctional monomer with a polyfunctional monomer; and crosslinked polymer particles obtained by polymerizing a styrenic monofunctional monomer with another monofunctional monomer and a polyfunctional monomer. Examples of the polymerization method adopted for obtaining these styrene polymer particles generally include suspension polymerization, microsuspension polymerization, emulsion polymerization, and dispersion polymerization.

Examples of a styrenic monofunctional monomer in the styrene polymer particles include styrene, as well as halogenated styrenes such as chlorostyrene and bromostyrene and alkyl styrenes such as vinyltoluene and α-methyl styrene, and optionally, these may be used in combination.

Examples of monofunctional monomers other than the styrenic monofunctional monomer in the styrene polymer particles include methacrylates such as methyl methacrylate, ethyl methacrylate, butyl methacrylate, cyclohexyl methacrylate, phenyl methacrylate, benzyl methacrylate, 2-ethylhexyl methacrylate, and 2-hydroxyethyl methacrylate; acrylates such as methyl acrylate, ethyl acrylate, butyl acrylate, cyclohexyl acrylate, phenyl acrylate, benzyl acrylate, 2-ethylhexyl acrylate, and 2-hydroxyethyl acrylate; and acrylonitrile, and optionally, these may be used in combination. Among others, methacrylates such as methyl methacrylate are preferred.

Examples of the polyfunctional monomers in the styrene polymer particles include methacrylates of dihydric and polyhydric alcohols such as 1,4-butanediol dimethacrylate, neopentyl glycol dimethacrylate, ethylene glycol dimethacrylate, diethylene glycol dimethacrylate, tetraethylene glycol dimethacrylate, propylene glycol dimethacrylate, tetrapropylene glycol dimethacrylate, trimethylolpropane trimethacrylate, and pentaerythritol tetramethacrylate; acrylates of dihydric and polyhydric alcohols such as 1,4-butanediol diacrylate, neopentyl glycol diacrylate, ethylene glycol diacrylate, diethylene glycol diacrylate, tetraethylene glycol diacrylate, propylene glycol diacrylate, tetrapropylene glycol diacrylate, trimethylolpropane triacrylate, and pentaerythritol tetraacrylate; and aromatic polyfunctional monomers such as divinylbenzene and diallyl phthalate, and optionally, these may be used in combination.

The refractive index of the styrene polymer particles, which depends on the constituent thereof, is typically from about 1.53 to 1.61. Generally, the refractive index tends to increase when the polymer has more phenyl groups and more halogeno groups.

Suitably used acrylic polymer particles are polymer particles comprising 50% by weight or more of an acrylic monofunctional monomer as monomer units. Examples of the acrylic polymer particles include high-molecular weight polymer particles obtained by polymerizing an acrylic monofunctional monomer; high-molecular weight polymer particles obtained by polymerizing an acrylic monofunctional monomer with another monofunctional monomer; crosslinked polymer particles obtained by polymerizing an acrylic monofunctional monomer with a polyfunctional monomer; and crosslinked polymer particles obtained by polymerizing an acrylic monofunctional monomer with another monofunctional monomer and a polyfunctional monomer. Examples of the polymerization method adopted for obtaining these acrylic polymer particles generally include suspension polymerization, microsuspension polymerization, emulsion polymerization, and dispersion polymerization.

Examples of acrylic monofunctional monomers in the acrylic polymer particles include methacrylates such as methyl methacrylate, ethyl methacrylate, butyl methacrylate, cyclohexyl methacrylate, phenyl methacrylate, benzyl methacrylate, 2-ethylhexyl methacrylate, and 2-hydroxyethyl methacrylate; acrylates such as methyl acrylate, ethyl acrylate, butyl acrylate, cyclohexyl acrylate, phenyl acrylate, benzyl acrylate, 2-ethylhexyl acrylate, and 2-hydroxyethyl acrylate; and methacrylic acid and acrylic acid, and optionally, these may be used in combination.

Examples of monofunctional monomers other than the acrylic monofunctional monomers in the acrylic polymer particles include the same monomers as the styrenic monofunctional monomers in the above styrene polymer particles and acrylonitrile, and optionally, these may be used in combination. Among others, styrene is preferred. Further, examples of polyfunctional monomers in the acrylic polymer particles include the same monomers as the polyfunctional monomers in the above styrene polymer particles, and optionally, these may be used in combination.

The refractive index of the acrylic polymer particles, which depends on the constituent thereof, is typically from about 1.46 to 1.55. Generally, also similar to the styrene polymer particles, the refractive index tends to increase when the polymer has more phenyl groups and more halogeno groups.

Those generally called a silicone rubber or a silicone resin, which are solid at ordinary temperature, are suitably used as siloxane polymer particles. The siloxane polymer can be suitably produced by hydrolyzing and condensing chlorosilanes such as dimethyldichlorosilane, diphenyldichlorosilane, phenylmethyldichlorosilane, methyltrichlorosilane, and phenyltrichlorosilane. The polymer thus obtained may be crosslinked by allowing a peroxide such as benzoyl peroxide, 2,4-dichlorobenzoyl peroxide, p-chlorobenzoyl peroxide, dicumyl peroxide, di-t-butyl peroxide, and 2,5-dimethyl- 2,5-di(t-butylperoxy)hexane to act thereon, or may be subjected to condensation crosslinking with alkoxysilanes if it has a silanol group at the end. The polymer is preferably a crosslinked polymer with which 2 to 3 organic groups are combined per one silicon atom.

The siloxane polymer particles may be obtained by, for example, pulverizing a siloxane polymer mechanically. Alternatively, the siloxane polymer particles may be obtained as spherical particles when the siloxane polymer is produced by curing a curable polymer having linear organosiloxane blocks or its composition in a sprayed state as described in JP-A-59-68333, or by hydrolyzing and condensing an alkyltrialkoxysilane or its partial hydrolysis condensate in ammonia or an aqueous solution of amines as described in JP-A-60-13813.

The refractive index of the siloxane polymer particles, which depends on the constituent thereof, is typically from about 1.40 to 1.47. Generally, the refractive index tends to increase when the polymer has more phenyl groups and more organic groups directly bonded to silicon atoms.

These inorganic or organic light diffusing agents may be used independently or in combination depending on required optical properties.
The type, particle size, and loadings of a light diffusing agent substantially determine the basic optical properties, such as transmittance and an optical diffusion coefficient, of a light diffuser plate.

The total thickness of the light diffuser plate, which is based on the structural design of the direct backlight for liquid crystal display, is from about 1 mm to 5 mm. The outer styrenic resin layer (B) has a thickness of from about 10 µm to 300 µm and preferably has a uniform thickness of within ±50 µm over the whole plane. Smaller unevenness of the layer thickness is preferred because it decreases the unevenness of optical properties and also the luminance unevenness and color unevenness on a liquid crystal display screen.

As described above, the object of the improvement in scratch resistance of the surface of the light diffuser plate, which is the subject of the present invention, is to provide a measure against scratches and abrasion caused by contact with the warpage-preventing pin installed in the direct backlight and to solve the problem that the light diffuser plate surface itself is scratched and the scratch is visible on a liquid crystal display screen as a black scratch.

When the light diffuser plate was conventionally made of an acrylic resin, it was unthinkable that the light diffuser plate surface was scratched because the surface was made of an acrylic resin which is harder than a material resin of the warpage-preventing pin, but the tip of the warpage-preventing pin was rather scratched and shaved down.

However, when an MS resin, a styrenic resin, a polycarbonate resin, or an olefinic resin was used as a material of the light diffuser plate instead of an acrylic resin due to the problem of warpage due to moisture absorption as mentioned above, scratches on the surface of the light diffuser plate has become a problem since these resins clearly have inferior surface hardness as compared with conventional acrylic resins.
Conventionally, it has been desirable that the surface of the light diffuser plate has fine concavo-convex structures as mentioned above.

For example, Patent Document 7 describes that, in order to improve aesthetic properties, the surface emboss patterns preferably have an average of ten-point roughness (represented by Rz) of from 0.2 to 0.5 µm, and Patent Document 8 describes that, in order to prevent glare, the average of center line surface roughness (represented by Ra) is preferably 0.25 µm or less. Thus, it has been considered that the surface of the light diffuser plate preferably has fine concavo-convex structures and there is no quality problem in these structures.

A key feature of the present invention is to provide large concavo-convex structures to the surface of the light diffuser plate on the complete contrary to fine concavo-convex structures which have been regarded desirable for the light diffuser plate. Providing large concavo-convex structures to the surface of the light diffuser plate has reduced the area of contact with a warpage-preventing pin, contact resistance, and frictional resistance. As a result, the tip of the warpage-preventing pin may be slippery on the surface of the light diffuser plate, which has reduced scratches. The present inventors have surprisingly found that such larger concavo-convex structures than before have a big effect also on lightfastness.

In the present invention, the concavo-convex structures of the surface of the light diffuser plate are represented by the surface arithmetic average roughness (represented by Ra) defined by the method of JIS B0601 and need to be 5 to 30 µm. When the concavo-convex structures have an arithmetic average roughness (Ra) of 5 µm or more, it is possible to prevent surface scratches caused by contact with the warpage-preventing pin even when a styrenic resin or a polycarbonate resin is used as a material. Further, the arithmetic average roughness (Ra) of 30 µm or less can prevent the optical loss due to the scattered reflection of the light caused by the concavo-convex structures and can maintain high luminance in a liquid crystal display. The arithmetic average roughness (Ra) is preferably in the range of from 5 µm to 20 µm, more preferably from 7 µm to 18 µm.

In the light diffuser plate of the present invention, it is necessary to blend 3.5 parts by weight to 5 parts by weight of an ultraviolet absorber into 100 parts by weight of a styrenic resin in the styrenic resin layer (B). Blending 3 parts by weight or more of an ultraviolet absorber has generally been unthinkable since it may degrade the surface appearance of the light diffuser plate.

However, providing the above-described arithmetic average roughness to the surface of the light diffuser plate according to the present invention has an effect of reducing bleed out of an ultraviolet absorber, thereby capable of significantly improving lightfastness and maintaining beautiful appearance. In order to prevent yellowing of a liquid crystal panel, it is necessary to blend 3.5 parts by weight or more of an ultraviolet absorber into 100 parts by weight of a styrenic resin. On the other hand, if an ultraviolet absorber is blended in a large amount, there may arise problems of plasticizing a resin of each layer, leading to reduction in surface hardness and luminance. Therefore, in order to maintain the effect of preventing scratches as much as possible and to satisfy the luminance specifications for a liquid crystal display, it is necessary to blend an ultraviolet absorber in an amount of 5 parts by weight or less. An ultraviolet absorber is preferably blended in an amount in the range of 3.5 parts by weight to 4.5 parts by weight, more preferably from 3.5 parts by weight to 4 parts by weight.

The type of the ultraviolet absorbers is not particularly limited, but any commercially available ultraviolet absorbers may be used, including a benzophenone ultraviolet absorber, a benzotriazole ultraviolet absorber, a triazine ultraviolet absorber, a salicylate ultraviolet absorber, and a malonic ester ultraviolet absorber. These ultraviolet absorbers may be used independently or in combination.

Note that an ultraviolet absorber may be incorporated into the low-hygroscopic resin layer (A). The loadings in this case are preferably 1 part by weight or less for maintaining color.

The light diffuser plate is usually produced by extrusion, injection molding or compression molding.
Extrusion is a method of forming a plate by melting a resin in an extruder and discharging it through a head or a sheet die attached at the tip of the extruder. The molten resin discharged through the sheet die usually passes between several roll molds, cooled, and solidified to form a plate on which the roll mold surfaces are transferred. The plate thickness is freely controllable by adjusting the gap of the roll molds.

Since the light diffuser plate according to the present invention is a layered resin plate, it is preferred to use co-extrusion. That is, a resin for the (A) layer is extruded by one extruder; a resin for the (B) layer is extruded by the other extruder; and these resins are joined in a sheet die for layering.

As a method of imparting concavo-convex structures, that is, the arithmetic average roughness specified in the present invention, to the surface of the light diffuser plate, for example, the following methods are mentioned: (1) a method of embossing concavo-convex structures on the surface of the light diffuser plate using the particle size that the light diffusing agent as an additive with resin has; (2) a method of carving concavo-convex structures on the mold used for preparing the light diffuser plate and heat-transferring them to the plate; (3) a method of transferring roll mold surfaces during extrusion on which concavo-convex structures are formed; and (4) a method of forming concavo-convex structures by directly carving the surface of the light diffuser plate such as sandblasting and etching; and the like. Any method may be used.

As the light diffusing agent as an additive in the above method (1), the inorganic or organic light diffusing agents as described above are used. The particle size of the light diffusing agent as an additive is preferably in the range of from 10 to 50 µm so that it can also provide concavo-convex structures. Generally, since a styrenic resin and a polycarbonate resin shrink during cooling, the size of the particles thereof is not equal to the surface average roughness, which is about half the particle size of the light diffusing agent as an additive.

The amount of the light diffusing agent as an additive is preferably from 1 to 30 parts by weight based on 100 parts by weight of a resin with which it is blended. In order to provide homogeneous concavo-convex structures to the surface of the light diffuser plate, the amount is preferably 1 part by weight or more, and in order not to cause appearance abnormality due to aggregation, the amount is preferably 30 parts by weight or less.

On the other hand, the above method of carving concavo-convex structures on the mold and transferring them to the plate is the simplest and optimum technique as a method of forming large concavo-convex structures on the surface of the light diffuser plate. Since a resin shrinks during cooling, concavo-convex structures larger by about twenty percent than target concavo-convex structures are carved on the mold surface, and they are heat-transferred to the surface of the light diffuser plate.

Further, in the above method (3), concavo-convex structures are formed on the surfaces of the roll molds used for extrusion.
The roll mold surface is generally mirror-polished, and the mirror surface is transferred to the resin plate surface. In the present invention, large concavo-convex structures are carved on the roll mold surface, and the concavo-convex structures can be transferred and shaped on the surface of the light diffuser plate in contact with the roll. There are several methods of carving the large concavo-convex structures on the roll mold surface. The structures can be provided by various machining methods, such as etching, electrochemical machining, electrical discharge machining, electron beam machining, plasma etching, ion beam machining, and sandblasting.

Since a resin shrinks during cooling as described above, the concavo-convex structures transferred and shaped on the surface of the light diffuser plate tend to be smaller than the concavo-convex structures carved on the roll mold surface. Therefore, it is desirable to carve concavo-convex structures larger by about twenty percent than target surface concavo-convex structures.

Of course, the light diffuser plate can also be produced by injection molding or compression molding. Also at this time, target concavo-convex structures can be transferred and shaped on the surface of the light diffuser plate by carving concavo-convex structures larger by about twenty percent larger than the target concavo-convex structures on the mold surface.

In the present invention, the light diffuser plate can be more functionalized by incorporation of other functional additives as long as the plate has concavo-convex structures represented by the arithmetic average roughness of the present invention on the surface thereof. The light diffuser plate can have a plurality of functional layers having various types of functionality as long as the plate has concavo-convex structures of the present invention on the surface. For example, it is possible to incorporate into such a functional layer a light stabilizer, a selective wavelength absorber, a coloring material, a flame retardant, a lubricant, an antistatic agent, or the like, each in an amount of from 0.001% by weight to 5% by weight. Thus, it is also possible to add thereto an antistatic layer, an electromagnetic wave shield layer, a gas barrier layer, a photocatalyst layer, a hydrophobic layer, a surface-cured layer, an anti-fogging layer, a soil-resistant layer, a luminous layer, a diffusion layer, a clear layer, and the like, each having a layer thickness of from 0.1 micrometer to 100 micrometers.

Figure 1 illustrates a structure as an example in which the light diffuser plate obtained by the present invention is used for the liquid crystal display for liquid crystal televisions. Cold-cathode tubes 4 are arranged on a reflection film 5 accommodated in a case 7 located at the rear side of a liquid crystal panel 1, and a light diffuser plate 3 according to the present invention and an optical film 2 for increasing luminance are placed between the liquid crystal panel 1 and the cold-cathode tubes 4. In addition, the reflection film 5 is fixed to the light diffuser plate 3 by warpage-preventing pins 6.

### Examples

The present invention will be described based on Examples.
The light diffuser plates evaluated in Examples and Comparative Examples were produced as described below by obtaining layered plastic plates comprising two layers by co-extrusion.

Two single-screw sheet extruders were used: one extruder has a screw diameter of 100 mm (for the low-hygroscopic resin layer (A)); and the other has a screw diameter of 60 mm (for the styrenic resin layer (B)). The resins shown in Tables 1 and 2 were melted and kneaded and introduced into a sheet die having a width of 1,000 mm. The resin for the (A) layer and the resin for the (B) layer were layered and then discharged from a head. Then, the light diffuser plate having a thickness of 2 mm, a width of 1,000 mm, and a length of 1,000 mm was produced by passing the layered resin to a vertical three-roll mold having a length of 1,500 mm and a diameter of 300 mm. The thickness of the styrenic resin layer (B) was adjusted to 50 µm by controlling the capacity of the two extruders, and the total thickness was adjusted to 2 mm by adjusting the gap of the three-roll mold.

Concavo-convex structures having a size to be indicated below were carved on the entire surfaces of the above vertical three-roll mold by electrical discharge machining so that the concavo-convex structures corresponded to the arithmetic average roughness (Ra) shown in Tables 1 and 2. Thus, when the light diffuser plate passed through the gap between the rolls, the concavo-convex structures were shaped on the surface of the plate by heat transfer. The evaluation methods of the diffusing plates obtained in Examples and Comparative Examples are as follows.
(1) Surface average roughness: The arithmetic average roughness (Ra) of the object was measured using a surface roughness meter (SURFCOM 575A manufactured by Tokyo Seimitsu Co., Ltd.) by the method according to JIS B0601. The measurement was performed at a cutoff value of 2.5 mm and an evaluation length of 20 mm.
(2) Warpage due to moisture absorption: The produced light diffuser plate was allowed to absorb water under the environment of 60°C and 95% RH for 98 hours. The light diffuser plate nearly saturated with water was mounted on a commercially available 32-inch liquid crystal television into the direct cold-cathode tube backlight and was allowed to stand for 24 hours during which the backlight was lighted.
   When dehydration and drying of the surface of the light diffuser plate started to cause warpage of the light diffuser plate through irradiation thereof with the backlight, the light diffuser plate was brought into contact with a liquid crystal panel, and some contact marks looked like a white wrinkle or a wave. The warpage due to moisture absorption was evaluated by the presence or absence of these contact marks produced on the screen. When there were no contact marks, the light diffuser plate was determined to be O, and the light diffuser plate on which contact marks were produced was determined to be x.
(3) Scratch resistance (rubbed with a warpage-preventing pin): The surface of the produced light diffuser plate was abutted with a warpage-preventing pin (made of a fire-resistant polystyrene resin, tip R=1 mm) taken out from the direct backlight of the same commercially available liquid crystal television as used in (2) and rubbed 20 times in a reciprocating manner with the pin to which a load of 1,000 g was applied.

Then, the light diffuser plate surface was visually observed, and when there was neither a scratch nor an abrasion, scratch resistance was determined to be O, and when a scratch was visually observed, the scratch resistance was determined to be x. (4) Lightfastness: The ultraviolet irradiation apparatus (SMDT51H manufactured by SEI MYUNG VACTRON) was used to irradiate the produced light diffuser plate with ultraviolet light of 100 J / square cm from a distance of 150 mm. The light diffuser plate surface is deteriorated and yellowed by the powerful ultraviolet irradiation. The yellowness of the light diffuser plate was measured using a color analyzer (TC 1800 manufactured by Tokyo Denshoku Co., Ltd.) according to JIS K7105.

Yellowness change of the light diffuser plate before and after the ultraviolet irradiation was calculated as a degree of yellowness. A degree of yellowness of 3 or less, 4 to 6, 7 to 9, or 10 or more was each represented by 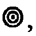 ○, Δ, or x. Note that, with respect to the required specifications for a liquid crystal television, the degree of yellowness must be 6 or less on the basis of a service life time of a liquid crystal television of 60,000 hours.
(5) Appearance: The surface of the produced light diffuser plate was checked visually, and when the surface had no problem and was beautiful, the appearance was determined to be O, and when any appearance abnormality was observed, such as color unevenness, a spot, an attachment, chalking, bleed out, discoloration, or deformation, the appearance was determined to be x.
(6) Luminance: The produced light diffuser plate was mounted on the same commercially available 32-inch liquid crystal television as used in (2), and the backlight was turned on. The liquid crystal screen displayed a white picture on the whole surface with a video controller. Then, a luminance meter (BM-7 manufactured by TOPCON Corporation) was used to measure the luminance at the center of the screen from a distance of 500 mm from the screen.

A luminance of 500 cds to 519 cds or of 520 cds or more was determined to be satisfactory and represented by O or 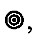 sequentially, and a luminance of 480 cds to 499 cds or of less than 480 cds was determined to be unsatisfactory and represented by Δ or x, sequentially. In the case of commercial liquid crystal televisions, the required specifications are that the luminance at the center of the screen is 500 cds/square cm or more.

The type of resins used in Examples and Comparative Examples is as follows.

PS: Polystyrene resin (G9504 manufactured by PS Japan Corporation), water absorption of 0.1 %
PC: Polycarbonate resin (PC-110 manufactured by Chimei-Asahi Corporation), water absorption of 0.2%
PMMA: Acrylic resin (LP-1 manufactured by Asahi Kasei Corporation), water absorption of 0.3%
MMAS: MS resin (MMA:St=60:40, MS600 manufactured by Nippon Steel Chemical Co., Ltd.), water absorption of 0.22%
SMMA: MS resin (MMA:St=20:80, MS200 manufactured by Nippon Steel Chemical Co., Ltd.), water absorption of 0.14%

### Example 1

A polystyrene resin (trade name G9504, manufactured by PS Japan Corporation) having a water absorption of 0.1 % in an amount of 100 parts by weight was mixed with 2 parts by weight of siloxane polymer particles (trade name Tospearl 120 manufactured by GE Toshiba Silicone Co., Ltd., average particle diameter of 2 µm) as an organic light diffusing agent, and the resulting mixture was supplied to the extruder for the low-hygroscopic resin layer (A). On the other hand, 100 parts by weight of a polystyrene resin (trade name G9504, manufactured by PS Japan Corporation) having a water absorption of 0.1 % was mixed with 3.5 parts by weight of an ultraviolet absorber (benzotriazole ultraviolet absorber) and 5 parts by weight of talc (average particle diameter of 15 µm, manufactured by Nippon Talc Co., Ltd.) as an inorganic light diffusing agent, and the resulting mixture was supplied to the extruder for the styrenic resin layer (B), followed by melting and kneading the mixture. Then, a light diffuser plate having a thickness of the styrenic resin layer (B) of 50 µ and a total plate thickness of 2 mm was produced by co-extrusion in the manner as described above. Concavo-convex structures having an arithmetic average roughness (Ra) of 10 µm are carved on the whole surfaces of the vertical three-roll mold, and a large arithmetic average roughness was formed on the light diffuser plate surface by heat-transferring the concavo-convex structures on the roll surfaces to the light diffuser plate surface.

When the arithmetic average roughness of the surface of the light diffuser plate produced was measured with a surface roughness meter, the arithmetic average roughness (Ra) was 8 micrometers, which was a little smaller than the concavo-convex structures carved on the rolls.

The light diffuser plate thus produced was evaluated for each item of warpage due to moisture absorption, scratch resistance, lightfastness, appearance, and luminance by each of the above-described methods. The results are shown in Table 1. The light diffuser plate produced was found to be a target light diffuser plate because it had no warpage due to moisture absorption and was excellent in all of scratch resistance, lightfastness, appearance, and luminance.

### Examples 2 to 5

Light diffuser plates were produced in the same manner as in Example 1 and evaluated for each item except that the amount of the ultraviolet absorber blended with the styrenic resin layer (B) was changed; and the size of the arithmetic average roughness carved on the roll mold was changed to 6 µm in Example 2, 20 µm in Example 4, and 30 µm in Example 5. The evaluation results are shown in Table 1. All items have satisfied the required specifications as can be seen from the results in Table 1.

### Comparative Examples 1 to 8

Light diffuser plates were produced in the same manner as in Example 1 and evaluated for each item except that the amount of the ultraviolet absorber blended with the styrenic resin layer (B) was changed; and the size of the arithmetic average roughness carved on the roll mold was changed to 4 µm in Comparative Example 6, 6 µm in Comparative Example 7, and 60 µm Comparative Example 8. The evaluation results are shown in Table 1.

Note that the surface average roughness in Comparative Examples 5 and 6 was 0.2 micrometer. The rolls used in these Comparative Examples had a substantially mirror surface with a surface arithmetic average roughness (Ra) of 0.05 µm. The arithmetic average roughness of the surface of the light diffuser plate (Ra) was enlarged to 0.2 µm because the inorganic light diffusing agent therein floated to the surface as an internal matting agent.

As can be seen from the results in Table 1, none of the light diffuser plates had satisfied all the required specifications for liquid crystal televisions.
When the amount of the ultraviolet absorber was reduced, the resulting light diffuser plate had high luminance but unsatisfactory lightfastness. When the amount of the ultraviolet absorber was increased, the resulting light diffuser plate was the one that cannot satisfy the required specifications because it had a reduced scratch resistance due to the plasticizing effect of the ultraviolet absorber, and also had a poor appearance due to color unevenness and a reduced luminance.

On the other hand, when the arithmetic average roughness of the surface of the light diffuser plate was small and fine, the light diffuser plate had good luminance but a reduced scratch resistance. The results of improvement in lightfastness were also unsatisfactory. Conversely, when the surface arithmetic average roughness was further increased, the light diffuser plate showed a further reduced luminance due to the optical loss by the scattered reflection of the light at the surface.

### Examples 6 to 11, Comparative Examples 9 to 38

Light diffuser plates were produced in the same manner as in Example 1 and evaluated for each item except that the type of the resin used for the low-hygroscopic resin layer (A) or the styrenic resin layer (B), the amount of the ultraviolet absorber blended with the styrenic resin layer (B), or the arithmetic average roughness of the surface was changed as described in Table 2. The evaluation results are shown in Table 2.

**[Table 1]**

| | Low-hygroscopic resin layer | Styrenic resin layer | Ultraviolet absorber | Arithmetic average roughness | Warpage due to moisture absorption | Scratch resistance | Lightfastness | Appearance | Luminance |
|---|---|---|---|---|---|---|---|---|---|
| Example 1 | PS | PS | 3.5 parts by weight | 8 µm | ○ | ○ | ⊚ | ○ | ⊚ |
| Example 2 | PS | PS | 3.5 parts by weight | 5 µm | ○ | ○ | ○ | ○ | ⊚ |
| Example 3 | PS | PS | 5 parts by weight | 8 µm | ○ | ○ | ⊚ | ○ | ○ |
| Example 4 | PS | PS | 5 parts by weight | 17 µm | ○ | ○ | ⊚ | ○ | ○ |
| Example 5 | PS | PS | 5 parts by weight | 26 µm | ○ | ○ | ○ | ○ | ○ |
| Comparative Example 1 | PS | PS | 1 parts by weight | 8 µm | ○ | ○ | × | ○ | ⊚ |
| Comparative Example 2 | PS | PS | 3 parts by weight | 8 µm | ○ | ○ | △ | ○ | ⊚ |
| Compartive Example 3 | PS | PS | 7 parts by weight | 8 µm | ○ | ○ | ○ | ○ | △ |
| Compartive Example 4 | PS | PS | 10 parts by weight | 8µm | ○ | x | △ | x | x |
| Comparative Example 5 | PS | PS | 5 parts by weight | 0.2 µm | ○ | x | △ | × | ○ |
| Comparative Example 6 | PS | PS | 8 parts by weight | 0.2 µm | ○ | × | △ | × | ○ |
| Comparative Example 7 | PS | PS | 5 parts by weight | 3 µm | ○ | × | ○ | x | ○ |
| Comparative Example 8 | PS | PS | 5 parts by weight | 50 µm | ○ | ○ | ○ | x | × |

| | | | | | | | | | |
|---|---|---|---|---|---|---|---|---|---|
| PS: Polystyrene resin (G9504 manufactured by PS Japan Corporation), water absorption of 0.1% PC: Polycarbonate resin (PC-110 manufactured by Chimei-Asahi Corporation), water absorption of 0.2% PMMA: Acrylic resin (LP-1 manufactured by Asahi Kasei Corporation), water absorption of 0.3% MMAS: MS resin (MMA:St=60:40, MS600 manufactured by Nippon Steel Chemical Co., Ltd.), water absorption of 0.22% SMMA: MS resin (MMA:St=20:80, MS200 manufactured by Nippon Steel Chemical Co., Ltd.), water absorption of 0.14% | | | | | | | | | |

**[Table 2]**

| | Low- hygroscopic resin layer | Styrenic resin layer | Ultraviolet absorber | Arithmetic average roughness | Warpage due to moisture absorption | Scratch resistance | Lightfastness | Appearance | Luminance |
|---|---|---|---|---|---|---|---|---|---|
| Example 6 | PS | SMMA | 3.5 parts by weight | 8 µm | ○ | ○ | ⊚ | ○ | ○ |
| Example 7 | PC | PS | 3.5 parts by weight | 8 µm | ○ | ○ | ○ | ○ | ⊚ |
| Example 8 | PC | PS | 3.5 parts by weight | 8 µm | ○ | ○ | ○ | ○ | ⊚ |
| Example 9 | PC | SMMA | 3.5 parts by weight | 8 µm | ○ | ○ | ○ | ○ | ○ |
| Example 10 | SMMA | PS | 3.5 parts by weight | 8 µm | ○ | ○ | ⊚ | ○ | ○ |
| Example 11 | SMMA | SMMA | 3.5 parts by weight | 8 µm | ○ | ○ | ⊚ | ○ | ○ |
| Comparative Example 9 | PS | MMAS | 3.5 parts by weight | 8 µm | × | ○ | ⊚ | ○ | ○ |
| Comparative Example 10 | PS | PMMA | 3.5 parts by weight | 8 µm | × | ○ | ⊚ | ○ | ⊚ |
| Comparative Example 11 | PC | PMMA | 3.5 parts by weight | 8 µm | × | ○ | ○ | ○ | ⊚ |
| Comparative Exampe 12 | PC | MMAS | 3.5 parts by weight | 8 µm | × | ○ | ○ | ○ | ○ |
| Comparative Example 13 | SMMA | MMAS | 3.5 parts by weight | 8 µm | × | ○ | ⊚ | ○ | ○ |
| Comparative Example 14 | SMMA | PMMA | 3.5 parts by weight | 8 µm | × | ○ | ⊚ | ○ | ○ |
| Comparative Example 15 | MMAS | PS | 3.5 parts by weight | 8 µm | × | ○ | ⊚ | ○ | ○ |
| Comparative Example 16 | MMAS | SMMA | 3.5 parts by weight | 8 µm | × | ○ | ⊚ | ○ | ○ |
| Comparative Example 17 | MMAS | MMAS | 3.5 parts by weight | 8 µm | × | ○ | ⊚ | ○ | ○ |
| Comparative Example 18 | MMAS | PMMA | 3.5 parts by weight | 8 µm | × | ○ | ⊚ | ○ | ○ |
| Comparative Example 19 | PMMA | MMAS | 3.5 parts by weight | 8 µm | x | ○ | ⊚ | ○ | ○ |
| Comparative Example 20 | PMMA | PMMA | 3.5 parts by weight | 8 µm | x | ○ | ⊚ | ○ | ⊚ |
| Comparative Example 21 | MMAS | SMMA | 3.5 parts by weight | 0.2 µm | × | x | △ | x | ○ |
| Comparative Example 22 | MMAS | SMMA | 1 parts by weight | 0.2 µm | × | × | △ | ○ | ○ |
| Comparative Example 23 | SMMA | SMMA | 3.5 parts by weight | 0.2 µm | ○ | × | △ | x | ○ |
| Comparative Example 24 | SMMA | SMMA | 1 parts by weight | 0.2 µm | ○ | x | x | ○ | ○ |
| Comparative Example 25 | PS | MMAS | 3.5 parts by weight | 0.2 µm | × | × | △ | × | ○ |
| Comparative Example 26 | PS | MMAS | 1 parts by weight | 0.2 µm | x | x | x | ○ | ○ |
| Comparative Example 27 | SMMA | MMAS | 3.5 parts by weight | 0.2 µm | × | × | △ | x | ○ |
| Comparative Example 28 | SMMA | MMAS | 1 parts by weight | 0.2 µm | × | × | × | ○ | ○ |
| comparative Example 29 | MMAS | MMAS | 3.5 parts by weight | 0.2 µm | x | x | ○ | x | ○ |
| Comparative Example 30 | MMAS | MMAS | 1 parts by weight | 0.2 µm | x | x | △ | ○ | ○ |
| Comparative Example 31 | PMMA | MMAS | 3.5 parts by weight | 0.2 µm | x | ○ | ○ | x | ○ |
| comparative Example 32 | PMMA | MMAS | 1 parts by weight | 0.2 µm | x | ○ | ○ | ○ | ○ |
| Comparative Example 33 | SMMA | PMMA | 3.5 parts by weight | 0.2 µm | x | x | △ | x | ○ |
| Comparative Example 34 | SMMA | PMMA | 1 parts by weight | 0.2µm | x | x | x | ○ | ○ |
| Comparative Example 35 | MMAS | PMMA | 3.5 parts by weight | 0.2 µm | x | ○ | ○ | x | ○ |
| Comparative Example 36 | MMAS | PMMA | 1 parts by weight | 0.2 µm | x | | ○ | ○ | ○ |
| Comparative Example 37 | PMMA | PMMA | 3.5 parts by weight | 0.2 µm | x | ○ | ⊚ | x | ⊚ |
| Comparative Example 38 | PMMA | PMMA | 1 parts by weight | 0.2 µm | x | ○ | ⊚ | ○ | ⊚ |

### Industrial Applicability

The light diffuser plate according to the present invention can be suitably used as an optical member for a direct backlight device for a liquid crystal display.

## Claims

1. A light diffuser plate for a liquid crystal display, comprising:
a low-hygroscopic resin layer (A) having a water absorption after 24 hours of 0.2% or less, as measured according to JIS K7209; and
a styrenic resin layer (B) provided on at least one surface of the low-hygroscopic resin layer (A), the styrenic resin layer (B) comprising 50% or more of a styrenic resin and 3.5 to 5 parts by weight of an ultraviolet absorber based on 100 parts by weight of the styrenic resin,
wherein the surface of the layer (B) has an arithmetic average roughness (Ra) of 5 µm to 30 µm, as measured according to JIS B0601.

2. The light diffuser plate for the liquid crystal display according to claim 1, wherein the low-hygroscopic resin is a styrenic resin or a polycarbonate resin.
